# EUROPÄISCHE PATENTSCHRIFT

(11) **EP 0 788 399 B1**
(45) Veröffentlichungstag und Bekanntmachung des Hinweises auf die Patenterteilung: **09.06.1999**
(21) Anmeldenummer: 95944819.2
(22) Anmeldetag: 25.10.1995
(51) Int. Cl.: B01D 53/72, B01D 53/85

(54) **BIOFILTERMASSE ZUR REINIGUNG VON GASEN**
BIOLOGICAL FILTER MASS FOR GAS PURIFICATION
MASSE FILTRANTE BIOLOGIQUE POUR L'EPURATION DE GAZ

(30) Priorität: 28.10.1994 AT 202094
(43) Veröffentlichungstag der Anmeldung: 13.08.1997
(73) Patentinhaber: Leopold Edlmair Kunststofftechnik, 4501 Neuhofen (AT)
(72) Erfinder: EDER, Günter, A-5730 Mittersill (AT); KAHR, Rudolf, A-5730 Mittersill (AT)
(74) Vertreter: Babeluk, Michael, Dipl.-Ing. Mag., Patentanwälte Babeluk - Krause
(86) Internationale Anmeldenummer: AT9500211
(87) Internationale Veröffentlichungsnummer: WO9613321

(56) Entgegenhaltungen:
- DE-A- 4 041 233
- DE-A- 4 204 190
- DE-U- 9 216 668

## Beschreibung

Die Erfindung betrifft eine Biofiltermasse zur Reinigung von Gasen, insbesonders Abluft, die dazu vorgesehen ist, ein Bett zu bilden, durch das die Gase hindurchgeleitet werden und das mit Mikroorganismen besiedelbar ist.

Aus der DE-U 92 16 668 ist eine Filtermasse für Biogasfilter bekannt, die unter anderem Kerne von Steinobst und Mineralstoffe enthält. Eine solche Masse ist zur Entfernung von geruchsintensiven Schadstoffen grundsätzlich geeignet, es hat sich jedoch herausgestellt, daß es beim Anfahren mit einer neuen Filtermasse relativ lange dauert, bis eine einigermaßen befriedigende Abscheiderate erreicht wird. Auch im Gleichgewichtszustand ist die Abscheidung und der Abbau der Schadstoffe nicht vollständig zufriedenstellend. In diesem Dokument wird auch die Verwendung von Traubenkernen beschrieben, es wird davon jedoch abgeraten.

Aus der DE-A 42 04 190 ist weiters ein Verfahren und eine Vorrichtung zum Reinigen von Gasen bekannt, wobei die zu reinigenden Gase durch eine Schüttung aus organischem Material geleitet werden. Als organisches Material werden Torf-Heidekraut-Gemische, Rindenschnipsel, Holzschnipsel, Kompost oder auch andere Gemische aus Torf/Kunststoff, Kompost/Kunststoff oder dgl. vorgeschlagen. Um eine ausreichende Leistung dieses Biofilters zu erzielen, ist es dabei notwendig, den Mikroorganismen, die die organische Schicht besiedeln, Nährstoffe zuzuführen. Dadurch werden jedoch auch unerwünschte Mikroorganismen gefördert, die wiederum durch Zugabe von Giftstoffen unterdrückt werden müssen. Der Betrieb eines solchen biologischen Filters ist daher aufwendig und von einer genauen Überwachung und Regelung abhängig. Weiters ist die Verwendung von Giftstoffen aus Gründen des Umweltschutzes bedenklich.

Weiters ist aus der DE-A 40 41 233 ein Verfahren zur Beseitigung von Geruchsstoffen aus Abluft bekannt, das als Filtermaterial ebenfalls Fasertorf und Heidekraut verwendet. Bei diesem Verfahren wird zur Erhöhung der Wirksamkeit das Filtermaterial in einer drehbaren Trommel angeordnet, um die Wirksamkeit entsprechend zu gewährleisten. Dieses Verfahren benötigt daher aufwendige mechanische Komponenten und ist für eine Vielzahl von Anwendungen nicht in wirtschaftlicher Weise einsetzbar.

Ferner offenbart die EP-A 492 135 eine Vorrichtung zur Reinigung von Luft, bei der in einer Reinigungskolonne Filterschichten angeordnet sind, die mit Mikroorganismen besiedelt sind. Als Filterschicht werden hierbei Rindenabfälle genannt. Um die entsprechende Reinigungswirkung zu erzielen, ist hierbei eine aufwendige Befeuchtungseinrichtung erforderlich.

Weitere biologische Filter werden auch in der DE-A 41 02 167 der EP-A 497 214 und der EP-A 470 468 beschrieben. Auch diesen Verfahren und Vorrichtungen haften jedoch ähnliche Nachteile an, wie sie oben beschrieben worden sind.

Aufgabe der Erfindung ist es, diese Nachteile zu vermeiden und eine Biofiltermasse anzugeben, die in einfacher Weise die Durchführung eines Verfahrens zur Reinigung von Gasen ermöglicht. Insbesonders soll beim Anfahren schnell eine befriedigende Abbaurate der Schadstoffe erreicht werden. Dabei sollen vor allem umweltrelevante und geruchsbildende Komponenten des Abgases wie z.B. Alkohole, Ketone, Aromaten, Ester, Aldehyde und Amine wirksam und nahezu vollständig aus dem Abgas entfernt werden. Der Betrieb des Filters soll sehr robust sein, so daß auch ohne aufwendige Überwachung und Regelung der verschiedenen Betriebsparameter ein gutes Reinigungsverhalten erzielbar ist. Der gesamte Aufbau des Filters soll möglichst einfach sein, so daß eine Reinigung der Gase in einer Vielzahl von Einsatzbereichen wirtschaftlich möglich ist.

Eine weitere Aufgabe der Erfindung ist es, eine Biofiltermasse anzugeben, die einfach und kostengünstig herstellbar ist und die bei ihrer Entsorgung keine Umweltprobleme verursacht.

Diese Aufgaben werden dadurch gelöst, daß die Biofiltermasse im wesentlichen aus Traubenkernen, Biertrebern, mineralischen Additiven, und vorzugsweise Lavagrus besteht. In überraschender Weise hat sich herausgestellt, daß eine Biofiltermasse dieses Aufbaues mit und ohne weitere Zusätze ein gutes Trägermaterial für Mikroorganismen darstellt, wobei eine besonders hohe Leistung in bezug auf die Abscheidung pro Volumseinheit des Trägermaterials erzielbar ist. Insbesonders hat sich gezeigt, daß schon äußerst geringe Mengen an Biertrebern die Geschwindigkeit, mit der die Abbauprozesse einsetzen, wesentlich erhöhen.

Die Reinigung der Abluft erfolgt in zwei Schritten. Der erste Schritt ist ein physikalischer Vorgang, wobei aus der Abluft die Schadstoffe entfernt werden. Sie werden dabei in der Feuchte der Biomasse gelöst. Dieser Vorgang wird Absorption genannt. Im Wasserfilm der Biomasse und vorzugsweise an der Oberfläche und den Bruchkanten der Traubenkerne befinden sich Mikroorganismen, welche nun im zweiten Schritt den biologischen Abbau der Schadstoffe durchführen. Die Mikroorganismen beziehen dadurch Energie und können neue Zellsubstanz aufbauen. Die Endprodukte des biologischen Prozesses sind Kohlendioxid und Wasser. Die Mikroorganismen, welche den Schadstoff am besten verarbeiten, haben auch die beste Möglichkeit zu überleben und sich zu vermehren.

Die erfindungsgemäße Biofiltermasse schafft für die Mikroorganismen und für die Absorption bestmögliche Rahmenbedingungen. Die Biomasse kann als biologischer und physikalischer Speicher bezeichnen werden, wobei die Struktur der Biomasse so ausgebildet ist, daß die Luft mit sie geringstmöglichem Druckverlust durchströmt und gleichzeitig keine Kanäle und Risse entstehen können, durch welche das Rohgas ohne Reinigung austreten kann. Wasser ist die Basis, in der die Mikroorganismen leben. Die Biomasse sorgt dafür, daß ausreichend Wasser gespeichert wird. In der Feuchte wird auch der Schadstoff gebunden und den Mikroorganismen zur Verfügung gestellt. Wenn kein Schadstoff im Rohgas vorhanden ist, werden die Mikroorganismen aus der Biomasse mit Nahrung versorgt. Die für den Schadstoffabbau benötigten Mikroorganismen können nur innerhalb eines engen pH - Bereiches existieren. Das bedeutet, daß kein Überschuß an Säure vorhanden sein darf. Insbesondere bei Abgasreinigungen für Kläranlagen kommt es sonst zur "Versäuerung" der Biomasse. Die erfindungsgemäße Biomasse sorgt dafür, daß eine Verschiebung des pH - Wertes abgefangen wird.

Wesentlich an der Erfindung ist, daß durch die besondere Mischung der Komponenten die Lebensbedingungen der Mikroorganismen optimal sind. Es ist im Rahmen der Erfindung möglich, in einem gewissen Ausmaß weitere Komponenten der Mischung hinzuzufügen, soweit diese die Lebensbedingungen der Mikroorganismen nicht nachteilig beeinflussen.

Besonders vorteilhaft ist es jedoch, wenn die Bestandteile in folgenden Gewichtsanteilen vorliegen:

| | |
|---|---|
| Traubenkerne | 10 - 95%, vorzugsweise 20 - 75% |
| Lavagrus/-split | 10 - 95%, vorzugsweise 25 - 40% |
| Mineralstoffe | 0,01 - 40%, vorzugsweise 1 - 20% |
| Biertrebern | 0,01 - 10%, vorzugsweise 0,01 - 6% |

Es hat sich herausgestellt, daß in diesem Bereich der Biofiltermasse besonders günstige Bedingungen für die Besiedelung mit Mikroorganismen und für die Stabilität des Betriebsverhalten vorliegen.

Die einzelnen Bestandteile der erfindungsgemäßen Biofiltermasse besitzen folgende Eigenschaften und werden folgendermaßen gewonnen:

### Traubenkerne:

Diese entstammen der Maische aus der Weinproduktion. Es können dazu alle bekannten Rebensorten verwendet werden, unabhängig von der Kerngröße. Die Maische wird in einem üblichen aeroben Verfahren verrottet. Am Ende dieses Vorganges wird der Kern ausgesiebt und gebrochen. In diesem Zustand kann das Material gelagert werden. Der Kern liegt im fertigen Zustand vor und behält diesen während der Lagerung und auch während der Verwendung in der erfindungsgemäßen Biofiltermasse bei.

Die Kerne werden in einem mehrstufigen Prozeß aufgeschlossen. Durch die Schale der Kerne ist sichergestellt, daß die Struktur stabil bleibt. Die Traubenkerne und deren Behandlung ist dafür verantwortlich, daß sich in erster Linie die gewünschten natürlich vorkommenden Mikroorganismen ansiedeln. Diese Mikroorganismen (Actinomyceten und Streptomyceten) werden bereits bei der Herstellung aus der Luft aufgenommen. Bis zum Zeitpunkt, an dem die Biomasse zum Einsatz kommt, gehen die Mikroorganismen in einen Ruhezustand über.

An der Schale des Kernes sind Stoffe wie z.B. Olein, Lignin und Tanin vorhanden. Diese stellen für die Mikroorganismen ein optimales Nährstoffangebot dar.

### Lavagrus - Lavasplit:

Dieser wird aus Steinbrüchen - z.B. aus der Region nördlich des Plattensees bis zur südlichen Steiermark, gewonnen. Diese Gesteinsart ist im Späten Tertiär entstanden und ist etwa 3-5 Mill. Jahre alt und wird auch als vulkanische Lockerprodukte bezeichnet. Er kann in Form von vulkanischem Staub, Asche, Sand, Lapilli, Bomben oder Blöcken vorliegen.

Er dient in der fertigen Biomasse u.a. als Wasserspeicher und zur Auflockerung der Struktur. Dadurch wird eine große aktive Oberfläche und hohe Effizienz der Biomasse erreicht. Außerdem ist das Haltevermögen für Wasser von grundlegender Bedeutung. Der Wasserfilm bestimmt, wie gut die Mikroorganismen ihre Arbeit (Abbauleistung) verrichten können. Dabei spielen Temperatur, pH - Wert und das Angebot an Nährstoffen eine wesentliche Rolle.

Der Lavasplit beinhaltet Spurenelemente in folgender Zusammensetzung:

| | | |
|---|---|---|
| Magnesium | MgO | 5,10% |
| Calcium | CaO | 8,25% |
| Eisenoxyd | Fe₂O₃ | 14,25% |
| Aluminiumoxyd | Al₂O₃ | 14,30% |
| Siliziumdioxyd | SiO₂ | 49,20% |
| Sulfat | SO₃ | 0,08% |

Diese Spurenelemente haben die Aufgabe die Wirkung der Mikroorganismen zu erhöhen. Der pH-Wert beträgt 6.4.

Um in der Biomasse verwendet werden zu können wird er vor dem Vermischen mit den anderen Bestandteilen auf eine Korngröße von 2 bis 20 mm gebrochen. Seine Dichte beträgt 1.160 kg/m3.

### Mineralstoffe:

Mineralstoffe haben die Aufgabe Spurenelemente für die Mikroorganismen bereitzustellen, die Versorgung mit Nährstoffen sicherzustellen, sowie zu verhindern, daß sich der pH - Wert in der Biomasse verändert (besonders von Bedeutung für die Abluftreinigung im Bereich von Kläranlagen, um Schwefelverbindungen abzufangen und die Bildung von Schwefelsäure zu verhindern). Vorzugsweise werden Diabas, Basalt, Serpentin, Granit, Gneis und Granolit verwendet. Hauptsächlich wird Diabas eingesetzt. Diabas ist vulkanischen Ursprungs und stammt aus dem Zeitalter des späten Tertiär (vor ca. 3-5 Mill. Jahren). Dieser wird aus Steinbrüchen - zB. aus der Region um die Kitzbühler Alpen gewonnen. Es wird durch Brechen und anschließender Feinstvermahlung (90% unter eine Korngröße von 0,004 mm, 10% zwischen 0,004 und 0,063 mm) zu Steinmehl verarbeitet.

Die enorme aktive Oberfläche (ca. 2500 m²/kg) durch die Feinstvermahlung, die vielseitigen Zusammensetzung von Spurenelementen, sowie dem Ionencharakter von silikatbasischem Material (Säurenpufferung) wird eine beschleunigte Umsetzung und aktive biologische Wirksamkeit ermöglicht.

### Chemische Zusammensetzung:

| | | |
|---|---|---|
| Siliziumoxyd | SiO₂ | 49,71% |
| Phosphor | P₂O₅ | 0,41% |
| Kalium | K₂O | 2,22% |
| Calzium | CaO | 1,68% |
| Magnesium | MgO | 3,99% |
| Natrium | Na₂O | 3,72% |
| Aluminiumoxyd | Al₂O₃ | 17,17% |
| Kupfer | Cu | 14,3 mg/kg |
| Mangan | Mn | 1050 mg/kg |
| Eisen | Fe | 53000 mg/kg |
| Zink | Zn | 80 mg/kg |
| Kobalt | Co | 5,96 mg/kg |
| Molybdän | Mo | 2,06 mg/kg |
| Bor | B | 0,70 mg/kg |

### Biertrebern:

Herstellung: Braugerste wird gereinigt und gewässert. Das Korn quillt auf, keimt bei einer Temperatur von 14°C und wird durch vorsichtiges Trocknen zu Malz verarbeitet. Das Malz wird geschrotet, mit frischem Brauwasser versehen und auf das Temperaturoptimum der Enzymwirksamkeit erwärmt (Maischen). Anschließend wird die Maische von den festen Bestandteilen getrennt. Diese festen Bestandteile werden Biertrebern genannt. Biertrebern sind die festen Rückstände des Malzes, und Malz ist biologisch aufgeschlossene Braugerste. In dem geschliderten Fabrikationsvorgang zur Herstellung von Bier fallen die Biertrebern als hochwertiges Nebenprodukt ab. Die Biertrebern werden getrocknet (Wassergehalt ca. 5%) um strukturstabil gelagert werden zu können.

Zusammensetzung: 1 kg Trockenbiertrebern besteht durchschnittlich aus:

| Nährstoffe: | |
|---|---|
| Rohprotein: | 261g |
| Rohfett: | 30g |
| Rohfaser: | 162g |
| Rohasche: | 41g |
| N-freie Extraktstoffe: | 457g |
| Stärke: | 9,2g |
| Zucker: | 1,6g |

| Mineralstoffe: | |
|---|---|
| Calcium: | 0,46% |
| Phosphor: | 0,73% |
| Natrium: | 0,45% |
| Magnesium: | 0,34% |

| Spurenelemente: | |
|---|---|
| Eisen: | 190 mg |
| Zink: | 85mg |
| Mangan: | 50mg |
| Kupfer: | 14mg |
| Kobalt: | 0,18mg |
| Selen: | 0,10mg |

| Vitamine: | |
|---|---|
| B1: | 1,26 mg |
| B2: | 0,91 mg |
| B6: | 0,62 mg |
| B12: | 38,9 µg |
| E: | 25,7 mg |
| Biotin: | 140 mg |
| Nicotinsäure: | 38,9 µg |
| usw. | |

### Amino- und Fettsäuren

Die Lagerung der Materialien erfolgt: Traubenkerne - in Lagerhallen direkt auf dem Boden; Lavasplit, Mineralstoffe und Biertrebern in Kunststoffsäcken oder Big-Bags. Die Lagertemperatur soll dabei zwischen +10°C und 30°C betragen.

Kurz vor dem Einsatz in Biofilteranlagen wird die Mischung der erfindungsgemäßen Biomasse hergestellt. Die verschiedenen Bestandteile werden in einem sich drehenden Mischzylinder über eine Dosieranlage zugeführt, vermischt und vorbefeuchtet. Im Mischzylinder sind zur optimalen Durchmischung Pflugscharen angeordnet. Sie sind in einem Winkel von 7° bis 12° angeordnet. Der Lavagrus wird vor der Dosierung in einer Brechanlage auf die gewünschte Korngröße von 2 bis 20 mm zerkleinert. Die Befeuchtung erfolgt mittels spezieller Hochdruck-Nebeldüsen und es wird eine Feuchteanteil von 10 - 20% eingestellt.

Nach dem Verlassen des Mischzylinders wird die Biomasse in Big-Bags abgefüllt. In diesen werden Sie zum vorgesehenen Einsatzort geliefert und in die Container mittels Kran gefüllt. Danach wird die Biomasse auf das maximale Wasserhaltevermögen befeuchtet. Während des Transportes sollte die Temperatur nicht unter +10°C liegen, kann aber kurzzeitig auch darunter sein. Ein Einfrieren ist in jedem Fall zu verhindern.

Eine besonders schnelle Anlaufzeit ist erzielbar, wenn die Traubenkerne in einem für die Besiedelung mit Mikroorganismen aufgeschlossenem Zustand vorliegen. Dies kann beispielsweise dadurch erreicht werden, daß die aus dem Traubentrester gewonnenen Traubenkerne gebrochen oder gemahlen werden. Besonders einfach läßt sich die Biofiltermasse jedoch dadurch herstellen, daß die Traubenkerne in Form von verrottetem Traubentrester als ganze Kerne vorliegen. Durch den Verrottungsprozeß wird ein optimaler Nährboden für die nützlichen Mikroorganismen geschaffen.

Die erfindungsgemäße Biofiltermasse wird in einer Schütthöhe von etwa 200 bis 800 mm in einem entsprechenden Behälter bereitgestellt. Dadurch ist auch eine kompakte und platzsparende Modul- oder Containerbauweise möglich. Die Strömung mit der zu reinigenden Abluft, kann dabei sowohl von unten nach oben als auch von oben nach unten erfolgen. Durch die relativ geringe Schütthöhe und die offene Struktur sind dabei die Druckverluste gering, wodurch der Leistungsbedarf der entsprechenden Be- und Entlüftungsaggregate klein gehalten werden kann.

Es ist vorteilhaft, die Abluft vor dem Eintritt in die Biomasse zu befeuchten, was vorzugsweise dadurch erfolgt, daß Wasser über derart verteilte Nebeldüsen fein zerstäubt wird, daß die gesamte Biofilterfläche gleichmäßig beaufschlagt wird. Durch die geringe Tropfengröße kann das Wasser sofort verdunsten.

Die Befeuchtung der Luft kann auch mit anderen Befeuchtungssystemen erfolgen, wie z.B. mit einem Dampfbefeuchter, wo über Düsenstöcke oder -lanzen die erforderliche Wassermenge eingebracht wird. Ebenso kann dies über einen vorgeschalteten Luftwäscher erfolgen. Eine weitere Möglichkeit besteht darin, über ein Drainage-System in der Biomasseschicht die notwendige Wassermenge direkt einzubringen.

Die erfindungsgemäße Biofiltermasse ermöglicht eine Reinigung in einem weiten Temperaturbereich von etwa 10°C bis 70°C. Daher ist in vielen Anwendungsfällen keine Beeinflussung der Temperatur des Gases erforderlich. Gegebenenfalls kann jedoch ein Erwärmen oder Kühlen des Gases vorgesehen werden, um sicher zu stellen, daß im Biofilter eine Temperatur herrscht, die in dem obigen zulässigen Bereich liegt.

Durch die günstigen Wachstums- und Lebensbedingungen für die Mikroorganismen, kann die Zeitdauer für die Inbetriebnahme und den Probebetrieb von 2 bis 3 Monaten bei bekannten Biofiltern auf zwei bis drei Wochen beim erfindungsgemäßen Biofilter verkürzt werden. Es ist keine Zufuhr von Nährstoffen für die Mikroorganismen erforderlich, da diese Nährstoffe von der Biomasse zur Verfügung gestellt werden. Ebenso ist es nicht erforderlich, sonstige Chemikalien oder dgl. zuzugeben. Bei Betriebsunterbrechungen, wie etwa am Wochenende oder während eines Betriebsurlaubes ist nur ein sehr geringer Frischlufteintrag notwendig, um die Aktivität des Filters voll aufrecht zu erhalten.

Die Einsatzgebiete der vorliegenden Erfindung sind vielseitig, so kann die erfindungsgemäße Biofiltermasse für unterschiedlichsten Anwendungen eingesetzt werden. Mit einem Biofilter können unangenehme Gerüche, Lösungsmittel oder organische Verbindungen aus der Abluft entfernt werden. Mit dem erfindungsgemäßen System ist auch die Reinigung der Abluft von schwefelhaltigen Verbindungen möglich. Die Erfindung ist unter anderem in folgenden Branchen einsetzbar: Lebensmittelindustrie, Kläranlagen, Futtermittelerzeugung, Kunststoffverarbeitung, Tierzucht, Papierindustrie, Tierkörperverwertung, Holzindustrie, Lackherstellung, Druckereien, Verarbeitung von Lösemitteln, Kunststoffverarbeitung.

Probleme mit Anrainern wegen unangenehmer Gerüche können in vielen Fällen mit Biofiltern behoben werden. Dabei handelt es sich meistens um Verbindungen, welche bei der Verrottung oder Verarbeitung von Pflanzen und Tieren entstehen. Der Einsatz im Bereich von Kläranlagen ist dabei eine der bekanntesten Anwendungen. Häufige Schadstoffe, die Geruchsprobleme verursachen, sind folgende: Schwefelwasserstoff (H₂S), Mercaptane, Thioether, Karbonsäuren, Ammoniak, Amine.

Im Gegensatz zur allgemeinen Geruchsbeseitigung handelt es sich im Bereich der Industrie um Schadstoffe, welche primär aus Gründen des Umweltschutzes aus der Abluft entfernt werden müssen. Geruchsbelästigungen und Probleme mit Anrainern treten dabei meistens auch auf. Eine große Anzahl an unterschiedlichsten Verbindungen kann mit Biofiltern beseitigt werden. Zum Beispiel werden folgende häufig auftretende Schadstoffe mittels Biofiltern entsorgt:

| | |
|---|---|
| Alkohole: | Methanol, Butanol, Propanol |
| Ketone: | Aceton, Methylethylketon (MEK) |
| Aromaten: | Toluol, Xylol, Styrol |
| Ether: | Glykolmonoethylether |
| Ester: | Ethylacetat, Butylacetat |
| Aldehyde: | Formaldehyd, Acetaldehyd |
| Karbonsäuren: | Buttersäure, Propionsäure |
| Thioether: | Dimethylsulfid |
| Mercaptane: | Methylmercaptan, Ethylmercaptan |
| Amine: | Triethylamin, Dimethylamin |

Weiters betrifft die Erfindung besondere Verfahren, bei denen die obige Biofiltermasse einsetzbar ist. Neben einem Verfahren zur direkten Reinigung von belasteter Abluft ist auch ein Verfahren vorgesehen, bei dem kontaminierte oder belastete Böden gereinigt werden können. Da hierbei eine Belüftung erforderlich ist, entsteht bei bekannten Verfahren unter anderem eine schadstoffbelastete Abluft. Wenn jedoch bei der Sanierung von Erdreich, bei der das Erdreich mit einer Zusammensetzung, wie sie oben beschrieben worden ist, vermischt wird und mit einem Gas, vorzugsweise Luft, beaufschlagt wird, so erfolgt eine Reinigung des Gases bereits in situ. Sollte dies nicht ausreichen, so kann vorgesehen sein, daß das Gas nach dem Durchströmen der Schüttung aus Erdreich und der Zusammensetzung in einem weiteren Schritt gereinigt wird, indem es durch eine Schüttung geleitet wird, die eine erfindungsgemäße Biofiltermasse enthält.

Die besonderen Vorteile der Erfindung sind: die geringe benötigte Filterfläche bei kleiner Schütthöhe, der Wegfall der Dauerberieselung der Schüttung samt dem damit verbundenen hohen Wasserverbrauch und der breite Temperaturbereich, in dem eine gute Wirkung erzielt wird. Dadurch ist ein nahezu wartungsfreier Betrieb möglich.

In der beigefügten Fig. ist schematisch eine Vorrichtung zur Reinigung von Gasen dargestellt, in der die erfindungsgemäße Biofiltermasse eingesetzt werden kann.

Das zu reinigende Gas wird in einem Sammler 1 von verschiedenen Quellen gesammelt. In einer Konditioniereinheit 2 werden, falls dies notwendig sein sollte, die Temperatur oder die Feuchtigkeit auf die erforderlichen Werte gebracht. In einem Reinigungsmodul 3 durchströmt das Abgas von oben nach unten eine Schüttung 4 der erfindungsgemäßen Filtermasse. Über einen Ventilator 5 wird das gereinigte Gas in die Umgebung ausgestoßen. In einer Hochdruckstation 6 kann Wasser auf einen hohen Druck gebracht werden, um über Düsen 7 die Filtermasse in fein zerstäubter Form zu beregnen. Eine Steuereinrichtung 8, die die Hochdruckstation 6 und den Reinigungsmodul 3 steuert, ist mit Drucksensoren P, Temperatursensoren T und Feuchtigkeitssensoren H verbunden. Auf diese Weise ist es möglich, die Betriebsbedingungen in Abhängigkeit von der Zusammensetzung des zu reinigenden Gases zu optimieren.

In der Folge wird die Erfindung anhand von Beispielen näher erläutert:

Es wurden vier Zusammensetzungen A1 bis A4 gemäß der vorliegenden Erfindung hergestellt. Diese wiesen die folgenden Zusammensetzungen auf:

| **A1:** | |
|---|---|
| Traubenkerne | 51% |
| Lavagrus | 40% |
| Mineralstoff: Diabas | 3% |
| Biertrebern | 6% |

| **A2:** | |
|---|---|
| Traubenkerne | 75% |
| Lavagrus | 23% |
| Mineralstoff: Diabas | 1% |
| Biertrebern | 1% |

| **A3:** | |
|---|---|
| Traubenkerne | 62% |
| Lavagrus | 29% |
| Mineralstoff: Diabas | 8,99% |
| Biertrebern | 0,01% |

| **A4:** | |
|---|---|
| Traubenkerne | 63% |
| Lavagrus | 25% |
| Mineralstoff: Diabas | 6% |
| Biertrebern | 6% |

Die mit diesen Zusammensetzungen A1 bis A4 erzielten Ergebnisse sind in der folgenden Tabelle zusammengestellt.

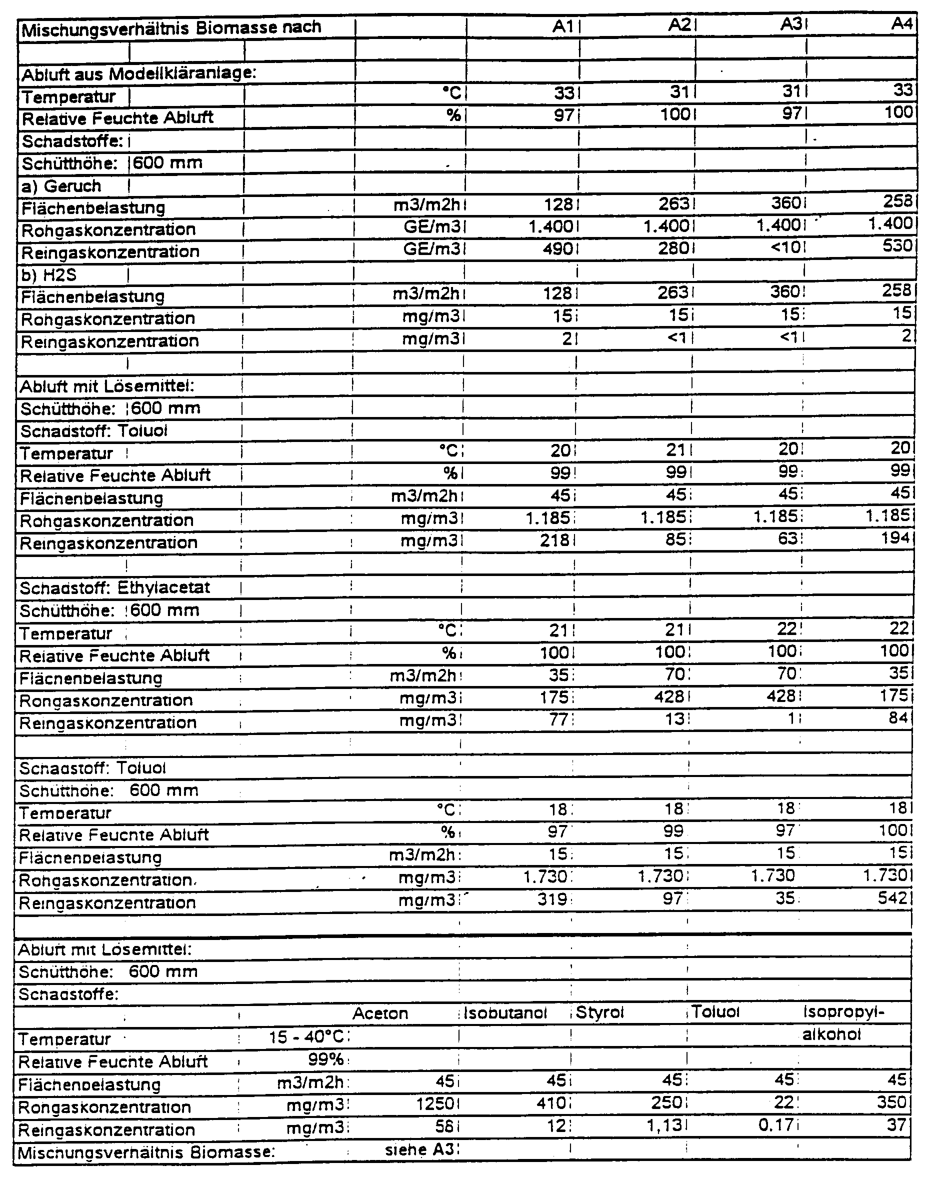

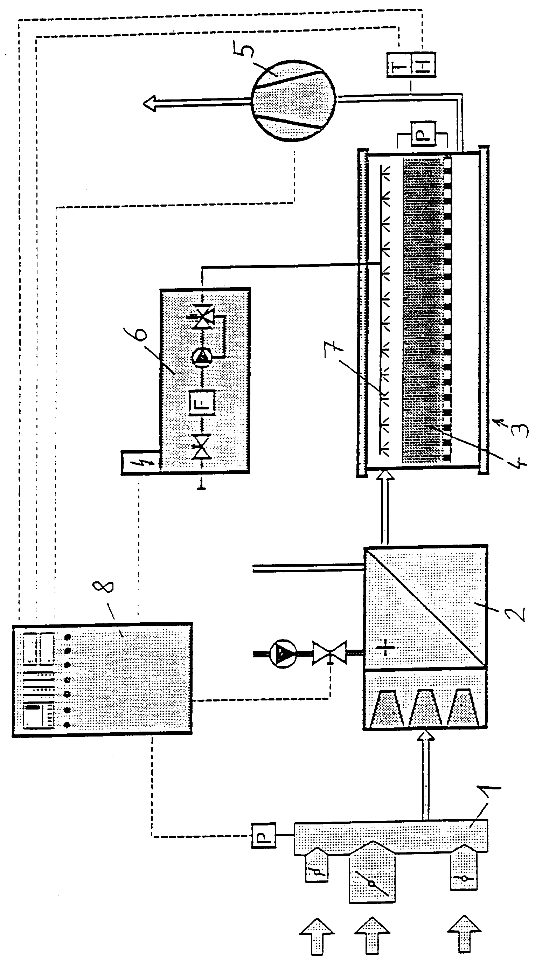

## Patentansprüche

1. Biofiltermasse zur Reinigung von Gasen, insbesonders Abluft, die dazu vorgesehen ist, ein Bett zu bilden, durch das die Gase hindurchgeleitet werden und das mit Mikroorganismen besiedelbar ist, dadurch gekennzeichnet, daß die Biofiltermasse im wesentlichen aus Traubenkernen, Biertrebern, Mineralstoffen und vorzugsweise Lavagrus bzw. -split besteht.

2. Biofiltermasse nach Anspruch 1, gekennzeichnet durch folgende Gewichtsanteile:
Traubenkerne 10 - 95%, vorzugsweise 20 - 75%;
Biertrebern 0,01 - 10%, vorzugsweise 0,01 - 6%;
Mineralstoffe 0,01 - 40%, vorzugsweise 1 - 20%.

3. Biofiltermasse nach Anspruch 2, weiter gekennzeichnet durch einen Anteil an Lavagrus von 10 - 95%, vorzugsweise 25 - 40%.

4. Biofiltermasse nach einem der Ansprüche 1 bis 3, dadurch gekennzeichnet, daß der Mineralstoff ein Gesteinsmehl ist, das vorzugsweise aus Diabas, Basalt, Serpentin, Granit, Gneis und Granolit, sowie Vulkangesteine, wie Tuffe und Tuffite und dgl. besteht.

5. Biofiltermasse nach einem der Ansprüche 1 bis 4, dadurch gekennzeichnet, daß die Traubenkerne in Form von verrottetem Traubentrester vorliegen.

6. Verfahren zur Reinigung von Gasen, bei dem ein zu reinigendes Gas mit Feuchtigkeit gesättigt wird und mit einer Temperatur zwischen 10°C und 70°C durch eine Schüttung geleitet wird, die eine Biofiltermasse nach einem der Ansprüche 1 bis 5 enthält.

7. Verfahren zur Sanierung von Erdreich, bei dem das Erdreich mit einer Biofiltermasse nach einem der Ansprüche 1 bis 5 vermischt wird und mit einem Gas, vorzugsweise Luft, beaufschlagt wird.

8. Verfahren nach Anspruch 7, dadurch gekennzeichnet, daß das Gas mit Feuchtigkeit gesättigt wird und mit einer Temperatur zwischen 10°C und 70°C durch die Schüttung aus Erdreich und der Biofiltermasse geleitet wird.

9. Verfahren nach Anspruch 7 oder 8, dadurch gekennzeichnet, daß das Gas nach dem Durchströmen der Schüttung aus Erdreich und der Biofiltermasse in einem weiteren Schritt gereinigt wird, indem es durch eine Schüttung geleitet wird, die eine Biofiltermasse nach einem der Ansprüche 1 bis 5 enthält.

## Claims

1. A biological filter mass for the purification of gases, in particular exhaust air, which is provided for forming a bed through which the gases are conducted and can be populated with microorganisms, characterized in that the biological filter mass consists substantially of grapeseed, malt husks, mineral substances and, preferably, lava gravel or grit.

2. A biological filter mass as claimed in claim 1, characterized by the following shares by weight:
Grapeseed 10 to 95 %, preferably 20 to 75 %
Malt husks 0.01 to 10 %, preferably 0.01 to 6 %;
Mineral substances 0.01 to 40 %, preferably 1 to 20 %.

3. A biological filter mass as claimed in claim 2, further characterized by a share of lava gravel of 10 to 95 %, preferably 25 to 40 %.

4. A biological filter mass as claimed in one of the claims 1 to 3, characterized in that the mineral substance is a powdered mineral which preferably consists of diabase, basalt, serpentine, granite, gneiss and granulite as well as volcanic rock such as tuff and tuffite and the like.

5. A biological filter mass as claimed in one of the claims 1 to 4, characterized in that the grapeseed is present in the form of decayed rape.

6. A method for the purification of gases, in which a gas to be purified is saturated with humidity and is guided with a temperature of between 10°C and 70°C through a bed which contains a biological filter mass as claimed in one of the claims 1 to 5.

7. A method for the decontamination of soil, in which the soil is mixed with a biological filter mass as claimed in one of the claims 1 to 5 and is charged with a gas, preferably air.

8. A method as claimed in claim 7, characterized in that the gas is saturated with humidity and is guided at a temperature of between 10°C and 70°C through the bed made of soil and the biological filter mass.

9. A method as claimed in claim 7 or 8, characterized in that after flowing through the bed of soil and the biological filter mass the gas is purified in a further step by being guided through a bed which contains a biological filter mass as claimed in one of the claims 1 to 5.

## Revendications

1. Masse de biofiltration pour épurer des gaz, en particulier de l'air de rejet, prévue pour constituer un lit à travers lequel on conduit les gaz et qui est colonisé par des micro-organismes, caractérisée en ce que la masse de biofiltration est constituée essentiellement de pépins de raisins, de drêche, de matières minérales et, de préférence, de granulés ou de gravillons de lave.

2. Masse de biofiltration selon la revendication 1, caractérisée en ce qu'elle a la composition pondérale suivante :
pépins de raisins 10 - 95 %, de préférence 20 - 75 %;
drêche 0,01 - 10 %, de préférence 0,01 - 6 %;
matières minérales 0,01 - 40 %, de préférence 1 - 20 %.

3. Masse de biofiltration selon la revendications 2, caractérisée par une portion de granulés de lave de 10 - 95 %, de préférence de 25 - 40 %.

4. Masse de biofiltration selon l'une des revendications 1 à 3, caractérisée en ce que la matière minérale est constituée de roche pulvérisée, de préférence du type ardoise, basalte, serpentine, granite, gneiss et granulite, ainsi que de roches volcaniques telles que le tuff, la tuffite et similaire.

5. Masse de biofiltration selon l'une des revendications 1 à 4, caractérisée en ce que les pépins de raisin sont sous la forme de pépins de raisins putréfiés.

6. Procédé pour épurer des gaz dans lequel un gaz à épurer est saturé par l'humidité, puis amené à une température entre 10 °C et 70 °C à travers un lit comprenant une masse de biofiltration selon l'une des revendications 1 à 5.

7. Procédé pour assainir un terreau, dans lequel on mélange le terreau avec une masse de biofiltration selon une des revendications 1 à 5, puis on injecte un gaz, de préférence de l'air.

8. Procédé selon la revendication 7, caractérisé en ce que le gaz saturé d'humidité et à une température entre 10 °C et 70 °C est amené à travers le lit de terreau et de masse de biofiltration.

9. Procédé selon la revendication 7 ou 8, caractérisé en ce que le gaz, après le passage à travers la couche de terreau et de masse de biofiltration, est épuré dans une opération subséquente, dans laquelle il est amené à travers un lit comprenant une masse de biofiltration selon l'une des revendications 1 à 5.
